# EUROPÄISCHE PATENTANMELDUNG

(11) **EP 0 564 669 A1**
(43) Veröffentlichungstag der Anmeldung: **13.10.1993**
(21) Anmeldenummer: 92105841.8
(22) Anmeldetag: 04.04.1992
(51) Int. Cl.: H04M 3/50, H04M 3/42

(54) **Netzwerk aus Sprach- und/oder Faxspeichersystemen**

(71) Anmelder: Alcatel SEL Aktiengesellschaft, D-70435 Stuttgart (DE); ALCATEL PORTUGAL SISTEMAS DE COMUNICACAO, SA, P-2750 Cascais (PT)
(72) Erfinder: Vogel, Ralf, Chevy Chase MD 20815 (US); Ferraz de Oliveira, Jorge Alberto, 2750 Cascais (PT); Bomberowitz, Robert J., Newton, Massachusets 02161 (US); Rodrigues Costa, Joao Luis, Massama (PT); Faria D. Filipe, Luis M., 2780 Oeiras (PT)
(74) Vertreter: Pohl, Herbert, Dipl.-Ing

(57) **Zusammenfassung**

Erhöhung der Gesamtkapazität eines Sprach- und/oder Faxspeichersystems, so daß mehr Teilnehmer auch während "kritischen" Tageszeiten in Echtzeitbetrieb Nachrichten Ablegen und Abfragen können.

Netzwerk aus einer Vielzahl von Sprach- und/oder Faxspeichersystemen, die über ein Hochgeschwindigkeitsbus (FDDI-Network) miteinander verbunden sind

## Beschreibung

Ein Sprachspeichersystem nimmt gesprochene Nachrichten vieler Teilnehmer auf, speichert die Nachrichten, läßt die Weiterverarbeitung zu und kann die Nachrichten wort- und stimmgetreu wiedergeben.

Jeder Teilnehmer, der ein solches Sprachspeichersystem nutzen will, läßt sich eine Sprachbox mit zugehöriger Box-Nummer einrichten. Somit kann jeder beliebige Teilnehmer, der diese Box-Nummer wählt, eine gesprochene Nachricht hinterlassen, die der Box-Inhaber zu einer beliebigen Zeit abfragen, weiterverarbeiten (z.B. einen Kommentar anhängen) und weiterleiten kann. Damit nur ein berechtigter Box-Inhaber auf seine Sprachbox zum abfragen und ggf. verändern der Sprachnachrichten eingreifen kann, wird der Zugang nur über ein dem Box-Inhaber bekanntes Paßwort (z.B. Eingabe einer mehrstelligen Zahl) ermöglicht.

Jeder beliebige Fernsprechteilnehmer kann über das Fernsprechnetz auf ein solches Sprachspeichersystem über eine dem System zugeordnete Zugangsnummer zugreifen und für Sprachbox-Inhaber Nachrichten ablegen, wobei mittels Sprachausgabe eine Benutzerführung erfolgt ("SEL-Sprachspeichersystem für das öffentliche Fernsprechnetz", Firmenprospekt der Standard Elektrik Lorenz AG, Geschäftsbereich Post, Lorenzstraße 10, 7000 Stuttgart 40, Zeichen 2465-8862-Be).

Desweiteren sind Sprachspeichersysteme bekannt, die zusätzlich auch Textnachrichten, sowie Kombinationen aus Sprache und Text verarbeiten können ("MEZZA, Voice and Text Integration in the Office", Office & Information Management International February 1989, Seiten 16 bis 17).

Da einerseits eine beliebige Anzahl von Teilnehmern auf solche Sprachspeichersysteme zugreifen können, aber andererseits jedes Sprachspeichersystem nur über eine endliche Anzahl von Zugangsleitungen (z.B. 64) verfügt, kann es sehr oft vorkommen, daß wegen Überlastung ein Zugriff weder für eine Nachrichtenablage noch für eine Abfrage möglich ist.

Es wäre zwar möglich die Anzahl der Zugangsleitungen eine Systems zu erhöhen, was jedoch zur Folge hätte, daß aufgrund der größeren Informationsflut das System wesentlich langsamer arbeiten würde. Dies würde aufgrund der längeren Belegungszeiten erhöhte Kosten für den Teilnehmer und letztendlich wieder eine Reduzierung der Gesamtkapazität hervorrufen.

Der Erfindung liegt die Aufgabe zugrunde, ein System zu realisieren, welches eine wesentlich höhere Verkehrsbelastung ermöglicht, so daß ein Teilnehmer auch während besonders kritischen Tageszeiten eine Nachricht für einen Box-Inhaber ablegen oder ein Box-Inhaber auf seine Nachrichten zugreifen kann.

Außerdem soll ein Verfahren zum Ablegen von Nachrichten in eine Nachrichtenbox in einem solchen System sowie ein Verfahren zum Abfragen oder Ablegen von Nachrichten durch einen Nachrichtenbox-Inhaber in einem solchen System angegeben werden.

Erfindungsgemäß werden diese Aufgaben durch ein Netzwerk gemäß der technischen Lehre des Patentanspruchs 1 sowie durch die verfahrensgemäßen technischen Lehren der Patentansprüche 6 und 8 gelöst.

Aufgrund des erfindungsgemäßen Netzwerkes kann ein Teilnehmer jederzeit Nachrichten für ein Box-Inhaber hinterlegen oder ein Box-Inhaber Nachrichten aus seiner Box abfragen und ablegen ohne daß er physikalisch direkt mit dem Sprach- und/oder Faxspeichersystem verbunden sein muß, in dem seine Nachrichtenbox tatsächlich eingerichtet ist. Darüber hinaus können sogar für einen Box-Inhaber über die Vielzahl der Sprach- und/oder Faxspeichersysteme beliebig verteilt Nachrichten abgelegt sein, dadurch die erfindungsgemäße Verbindung der einzelnen Systeme über einen eigenen z.B. Hochgeschwindigkeits-Nachrichtenweg, der Teilnehmer auf alle einzelnen Systeme Zugriff erhält. Wesentlich ist dabei, daß aus Sicht des Teilnehmers das gesamte Netzwerk sich so verhält, als ob es ein einziges Sprach- und/oder Faxspeichersystem wäre.

Weitere vorteilhafte Ausgestaltungen gemäß der Erfindung sind den Unteransprüchen zu entnehmen.

Im folgenden werden die erfindungsgemäßen Lehren anhand eines Ausführungsbeispiels in Verbindung mit den Figuren erläutert.

Es zeigen:
- Fig. 1: ein Prinzipschaltbild eines erfindungsgemäßen Netzwerkes und
- Fig. 2: ein Blockschaltbild eines Sprach- und/oder Faxspeichersystems gemäß der Erfindung.

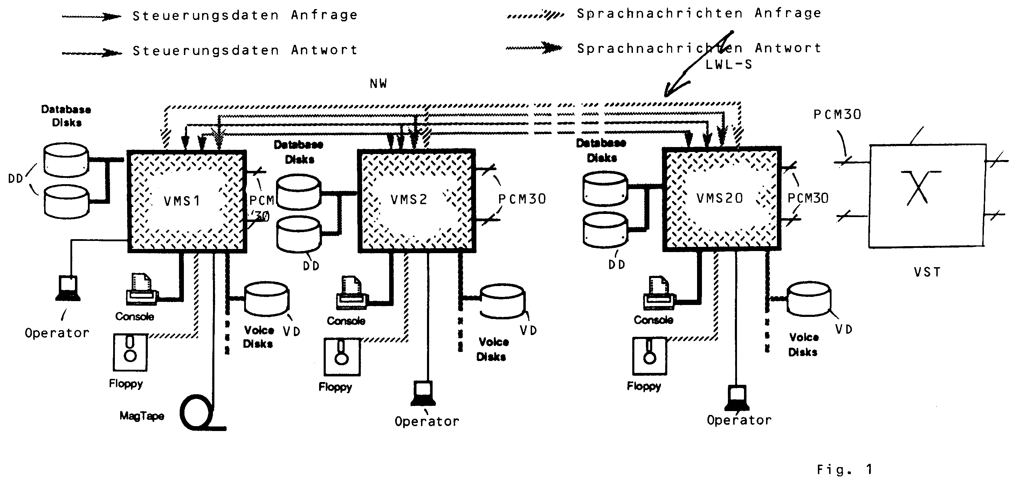

Ein Netzwerk, wie in Fig. 1 gezeigt, besteht aus einer Vielzahl von Sprach- und/oder Faxspeichersystemen VMS1, ..., VMS20. Jedes Sprach- und/oder Faxspeichersystem VMS1, ..., VMS20, im folgenden kurz System genannt, ist über eine Vielzahl von Zugangsleitungen (z.B. je 2 PCM 30 Bündel) mit einer üblichen Vermittlungsstelle VST verbunden. Es können auch mehrere Vermittlungsstellen VST in einem solchen Netzwerk vorhanden sein, wobei dann eine oder mehrere der Sprach- und/oder Faxspeichersysteme mit einer oder mehreren Vermittlungsstellen verbunden sein können, so daß auch größere Entfernungen (z.B. mehrere 100 km) keine Rolle spielen. Weiterhin enthält jedes System in an sich bekannter Weise eine Vielzahl von Massenspeichern VD, DD zum Ablegen von Sprach- und/oder Faxnachrichten aud für sonstige Steuerungsdaten, wie Systemprogramme, Benutzer und Konfigurationsdaten sowie Inhaltsverzeichnisse der Sprach- und/oder Faxspeicher (Voice Disks, Mag Tape, Database Discs, Floppy). Ferner ist ein Datensichtgerät mit einem Drucker für Bedienung und Wartung (Operator) jedem System zugeordnet.

Erfindungsgemäß enthält jedes System VMS1, ..., VMS20 eine Netzwerkschnittstelle FDDI, die mit einem alle Systeme verbindenden Nachrichtenweg NW verbunden sind. Der Nachrichtenweg NW ist in der Fig. 1 schematisch dargestellt und zwar derart aufgegliedert, daß einzelne wesentliche Abläufe, wie noch erläutert wird, erkennbar sind.

Ein solcher Nachrichtenweg NW ist z.B. mittels eines Lichtwellenleiter-Ringsystemes - Fiber Optic FDDI Network - realisiert, wobei die Netzwerkschnittstellen FDDI sogenannte FDDI-(Fibre Distributed Data Interface)-Schnittstellen sind, die eine bidirektionale Wandlung der elektrischen Signale in optische Signale zur Übertragung auf dem Lichtwellenleiterring ermöglichen.

Ein solches Lichtwellenleiter-Ringsystem LWL-S ermöglicht einen sehr schnellen Nachrichtenaustausch mit z.B. 100 MBit/s. Ein solches Lichtwellenleiter-Ringsystem wird z.B. mit dem Fiber Optic Node Controller V/FDDI 4211 Peregrine der Firma Interphase Corporation, 13800 Senlac, Dallas, Texas 75234 realisiert. Dieses Lichtwellenleiter-Ringsystem ist zum Nachrichtenaustausch mit Systemen, die einen VME-Bus enthalten, vorgesehen.

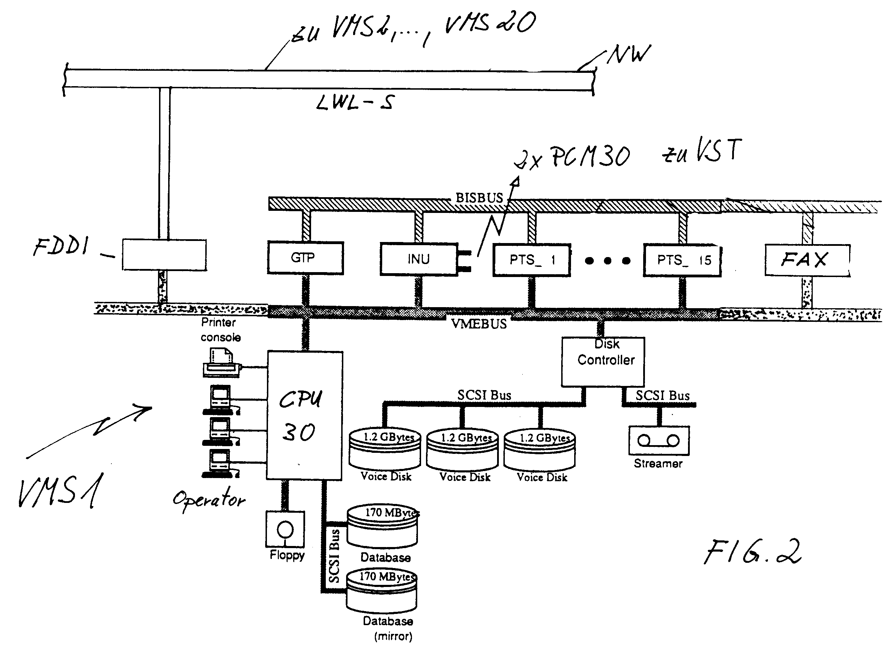

In jedem Sprach- und/oder Faxspeichersystem VMS1, ..., VMS20, wie in Fig. 2 gezeigt, ist das oben genannte Lichtwellenleiter-Ringsystem LWL-S über die die Netzwerkschnittstelle FDDI bildende FDDI-Schnittstelle mit einem Bussystem, d.h. mit einem VME-Bus verbunden. Weiterhin sind eine Signalisierungseinheit INU mit den Zugangsleitungen PCM30 verbunden. Außerdem ist die Signalisierungseinheit INU und eine Vielzahl (hier 15) von Zwischenspeichern PTS1, ..., PTS15, FAX mit dem VME-Bus verbunden. Außerdem sind an den VME-Bus eine Vermittlungseinheit GTP und eine Steuereinheit CPU-30 des Systems angeschlossen. Jedes System VMS1, ..., VMS20 kann mit bis zu 60 Zugangsleitungen, d.h. 60 Kanälen (2 x PCM 30) verbunden sein, so daß, gemäß Fig. 2, jeder Zwischenspeicher PTS1, ..., PTS15 je vier Zugangsleitungen (Kanäle) bedient. Um 60 Kanäle bedienen zu können, müssen dann auch eine entsprechende Anzahl von Signalisierungseinheiten INU vorgesehen werden. Weiterhin weist das Bussystem jedes Sprach- und/oder Faxspeichersystems, wie in Fig. 2 gezeigt, einen PCM-Bus BIS BUS zum Nachrichtenaustausch (Sprachdaten, Fax) auf, der mit allen Zwischenspeichern der Signalisierungseinheit INU und der Vermittlungseinheit GTP verbunden ist.

Die Steuereinheit CPU 30 jedes Systems besteht wenigstens aus einem Zentralrechner, aus einer DMA-Einheit, seriellen und parallelen Schnittstelle zum Anschluß des Datensichtgerätes für Bedienung und Wartung und sowie zum Anschluß von Massenspeichern (Database Discs). Die Steuereinheit CPU 30 verwaltet das gesamte System mit den zugehörigen Inhaltsverzeichnissen, und steuert das Bussystem. Die Vermittlungseinheit GTP leitet sämtliche Verbindungen, über das Bussystem auf die Zwischenspeicher der PTS1, ..., FAX weiter. Die Signalisierungseinheit INU enthält eine Anzahl von sogenannten Leitungsprozessoren, bearbeitet alle Signale auf den Zugangsleitungen und setzt sie in Aufträge für die Steuereinheit CPU 30 um.

Jeder Zwischenspeicher PTS1, ..., PTS15 enthält einen sogenannten Telefonsignalprozessor, der im wesentlichen die Sprache wandelt (digitalisiert, codiert) und vorverarbeitet, um z.B. Sprachpausen zu unterdrücken oder gegebenenfalls ein Fax-Protokoll zur Verfügung stellen. Die Massenspeicher, z.B. Plattenspeicher, für die Ablage der Sprachnachrichten, sind über einen weiteren Bus - SCSI-Bus - und eine Plattenspeichersteuerung - Disk Controller - ebenfalls mit dem Bussystem verbunden (wie in Fig. 2 dargestellt).

Im folgenden wird das erfindungsgemäße Verfahren zum Ablegen von Sprach- und/oder Faxnachrichten im wie zuvor beschriebenen erfindungsgemäßen Netzwerk (Fig. 1, Fig. 2) erläutert.

Zunächst wird der Fall beschrieben, daß ein beliebiger Teilnehmer, der keine sogenannte Heimatnachrichtenbox in dem Netzwerk aus der Vielzahl von Systemen VMS1, ..., VMS20 besitzt, eine Nachricht (Sprache und/oder Fax) einem Inhaber einer Heimatnachrichtenbox zukommen lassen will.

Zunächst gibt der Teilnehmer eine für den Dienst Sprach- und/oder Faxspeichersystem vorgegebene Zugangsnummer ein, die zur zugehörigen Vermittlungsstelle VST übertragen wird, welche dann erfindungsgemäß eine beliebige freie Zugangsleitung zu einem der Vielzahl von Systemen VMS1, ..., VMS20 belegt. Wenn so z.B. der Teilnehmer mit dem ersten System VMS1 verbunden wird, so gibt nun das erste System VMS1 eine Ansagenachricht mit der Aufforderung zur Eingabe der gewünschten Heimatnachrichten-Boxnummer aus. Zusätzlich wird für den Teilnehmer im ersten System VMS1 eine sogenannte Gästenachrichtenbox in einem der Zwischenspeicher PTS1 eingerichtet.

Nach Empfang der durch den Teilnehmer eingegebenen Boxnummer ermittelt nun das erste System VMS1 erfindungsgemäß, ob und wenn ja wo innerhalb des Netzwerkes die zugehörige Heimatnachrichtenbox eingerichtet ist. Dazu sendet das erste System VMS1 über die FDDI-Schnittstelle und das Lichtwellenleiter-Ringsystem LWL-S eine Rundrufnachricht an alle anderen Systeme VMS2, ..., VMS20 aus. Dasjenige System, in welchem die Heimatnachrichtenbox eingerichtet ist, z.B. das zweite System VMS2 überträgt dann, gesteuert durch die Steuereinheit CPU 30 über die FDDI-Schnittstelle und das Lichtwellenleiter-Ringsystem LWL-S eine Antwortnachricht zum ersten System VMS1. Dabei enthält diese Antwortnachricht alle die Heimatnachrichtenbox kennzeichnenden Steuerungsdaten. Damit ist nun im ersten System VMS1 bekannt, daß und wo zu der vom Teilnehmer eingegebenen Boxnummer eine Heimatnachrichtenbox existiert. Sodann wird durch das erste System VMS1 der Teilnehmer aufgefordert, eine Sprach- und/oder Faxnachricht einzugeben. Die vom Teilnehmer eingegebenen Sprach- und/oder Faxnachricht wird zunächst in der zugeordneten Gästenachrichtenbox des ersten Systems VMS1 abgelegt. Nach Beendigung der Sprach- und/oder Faxeingabe durch den Benutzer, wird die in der Gästenachrichtenbox abgelegte Nachricht, in den Massenspeicher des ersten Systems VMS1, d.h. von z.B. einem ersten Zwischenspeicher PTS1 über das Bussystem und die Plattenspeichersteuereinheit in einen der Plattenspeicher für Sprachnachrichten - Voice Disk - abgelegt. Dabei werden die zugehörigen Steuerdaten, wie Adressen, Länge der Nachricht, etc. erstellt und über die FDDI-Schnittstelle und das Lichtwellenleiter-Ringsystem LWL-S zur zweiten, die zugehörige Heimatnachrichtenbox enthaltenden System VMS2 übertragen, um dort die zur Heimatnachrichtenbox gehörigen Steuerungsdaten zu aktualisieren. Somit sind zwar die Sprach- und/oder Faxnachrichten über das Netzwerk verteilt abgelegt, aber alle Steuerungsdaten in dem der jeweiligen Heimatnachrichtenbox zugehörigen System VMS2 aktuell vorhanden. In vorteilhafter Weise erfolgt die Aktualisierung der Steuerungsdaten nach Beendigung der Eingabe durch den Benutzer, da eine Ausführung in Realzeit nicht erforderlich ist.

Somit kann einem Teilnehmer zur Nachrichtenablage beliebig eine der Vielzahl von Systemen zugeordnet werden, egal ob in diesem System auch tatsächlich die gewünschte Nachrichtenbox eingerichtet ist oder nicht.

Aufgrund des erfindungsgemäßen Netzwerks verhalten sich die Vielzahl der einzelnen Systeme VMS1, ..., VMS20 aus Sicht eines Teilnehmers wie ein einziges System. Über das sehr schnelle Lichtwellenleiter-Ringsystem LWL-S (100 MBit/s-Übertragungsgeschwindigkeit) sind alle notwendigen Nachrichtenübertragungen in Realzeit, also ohne daß der Teilnehmer eine zeitliche Unterbrechung bemerken würde, ausführbar.

Gemäß einer vorteilhaften Weiterbildung der Erfindung können auch nach Beendigung der Eingabe durch den Teilnehmer die Sprach- und/oder Faxnachrichten aus der Gästenachrichtenbox über das Lichtwellenleiter-Ringsystem LWL-S zur Heimatnachrichtenbox im zweiten System VMS2 übertragen werden.

Wenn nun ein berechtigter Teilnehmer, d.h. ein Teilnehmer dem eine Heimatnachrichtenbox in irgend einem der Vielzahl von Systemen des Netzwerkes eingerichtet wurde, Sprach- und/oder Faxnachrichten aus seiner Box abfragen oder in seine Box zur weiteren Verteilung ablegen will, so muß er genauso wie jeder andere Teilnehmer zunächst die für den Dienst "Sprach- und/oder Faxspeichersystem" vorgebenene Zugangsnummer eingeben. Dadurch wird durch die zugehörige Vermittlungsstelle VST erfindungsgemäß eine beliebige freie Zugangsleitung zu einem der Vielzahl von Systemen VMS1, ..., VMS20 belegt.

Wenn der Teilnehmer mit z.B. dem ersten System VMS1 verbunden ist, so gibt das erste System VMS1 eine Ansagenachricht mit der Aufforderung zur Eingabe der gewünschten Heimatnachrichten-Boxnummer aus. Zusätzlich wird für den Teilnehmer eine Gästenachrichtenbox eröffnet.

Es kann nun, wie zuvor beschrieben eine Boxnummer eingegeben und erfindungsgemäß über das Lichtwellenleiter-Ringsystem LWL-S das System gesucht werden, in dem die zugehörige Box eingerichtet ist.

Es kann aber auch erfindungsgemäß mit Eingabe der Heimatnachrichten-Boxnummer eine Kennung, wie z.B. das Sonderzeichen # hinzugefügt werden, die einen Box-Inhaber kennzeichnet.

Dann wird eine Rundrufnachricht durch das erste System VMS1 über die FDDI-Schnittstelle und das Lichtwellenleiter-Ringsystem LWL-S ausgesendet.

Aufgrund der Kennung überträgt jetzt das weitere System, z.B. das zweite Systeme VMS2, in dem die zugehörige Box eingerichtet ist, eine modifizierte Antwortnachricht über die FDDI-Schnittstelle zurück zum ersten System VMS1. Diese Antwortnachricht enthält zusätzlich zu den Steuerungsdaten bereits den zur Überprüfung der Berechtigung notwendigen Zugangscode sowie ein Inhaltsverzeichnis der Box.

Danach wird der Teilnehmer aufgefordert, den persönlichen Zugangscode einzugeben, um zu Überprüfen, ob es sich um einen für den Zugriff aus dieser Box berechtigten Teilnehmer handelt.

Falls dies der Fall ist, kann der berechtigte Teilnehmer nun frei über seine Box verfügen, d.h. Sprach- und/oder Faxnachrichten Abfragen, Verarbeiten oder auch neue Nachrichten hinterlegen, die dann an weitere Teilnehmner in deren Nachrichtenboxen übertragen werden. Eine detaillierte Übersicht über alle für den berechtigten Teilnehmer verfügbaren Funktionen ist dem als Anlage 1 beigefügtgen Menueplan zu entnehmen.

Damit der berechtigte Teilnehmer alle Funktionen auch in Realzeit ausführen kann, wird erfindungsgemäß eine permanente Verbindung zwischen dem ersten System VMS1 und dem die Heimatnachrichtenbox enthaltenden zweiten System VMS2 über die Netzwerkschnittstellen FDDI und das Lichtwellenleiter-Ringsystem LWL-S zur Verfügung gestellt. Dies ermöglicht dem berechtigten Teilnehmer eine Handhabung, als ob er nur in einem einzigen Sprach- und/oder Faxspeichersystem arbeiten würde.

Nach Beendigung des Zugriffs durch den berechtigten Teilnehmer werden die geänderten, d.h. aktualisierten Steuerungsdaten über die Netzwerkschnittstelle FDDI zum zweiten System VMS2 zur Aktualisierung der Heimatnachrichtenbox übertragen und die permanente Verbindung abgebaut.

Falls der berechtigte Teilnehmer auch eine neue Nachricht abgelegt hat, so wird diese Nachricht entweder in den Massenspeicher des ersten Systems VMS1 abgelegt und nur die veränderten Steuerungsdaten zur Heimatnachrichtenbox übertragen oder es werden die veränderten Steuerungsdaten und die Nachricht zur Heimatnachrichtenbox übertragen.

Durch das erfindungsgemäße Zusammenschalten von z.B. 20 Systemen mit je 60 Kanälen über ein Lichtwellenleiter-Ringsystem LWL-S mit hoher Übertragungsrate, wird einem Benutzer eine wesentlich höhere Verkehrsleistung bereitgestellt, so daß praktisch keinerlei Zugriffsprobleme aufgrund von belegten Zugangsleitungen auftreten können. Das gesamte erfindungsgemäße Netzwerk verhält sich jedoch aus Sicht eines Benutzers immer so, wie ein einziges schnelles und flexibles Sprach- und/oder Faxspeichersystem.

Eine solches erfindungsgemäßes Netzwerk ist insbesondere für die Anwendung in der Mobilkommunikation (z.B. für das D1-Netz der DBPT) gedacht, da gerade für einen Mobilfunkteilnehmer ein solcher Dienst "Sprach- und/oder Faxspeichersystem" erst dann interessant wird, wenn es keinerlei Belegungsprobleme gibt.

Erfindungsgemäß kann auch wenigstens eines der Sprach- und/oder Faxspeichersysteme mit einem Datensichtgerät für Verwaltung, Bedienung und Wartung - Operator - verbunden sein. Damit kann über die Netzwerkschnittstelle und den Nachrichtenweg vom Datensichtgerät aus eine Verbindung zu jedem der Vielzahl von Sprach- und/oder Faxspeichersysteme hergestellt werden, so daß von jedem der Systeme aus, die über ein Datensichtgerät verfügen die Funktionen Verwalten, Bedienen und Warten für jedes andere System ausführbar sind.

In weiterer Ausgestaltung des erfindungsgemäßen Netzwerkes kann für die Realisierung der Netzwerkschnittstellen FDDI und des Nachrichtenweges LWL-S auch ein Ethernet nach IEEE 802.3 oder ein Token Ring nach IEEE 802.5 genutzt werden.

## Patentansprüche

1. Netzwerk, bestehend aus einer Vielzahl von Sprach- und/oder Faxspeichersystemen (VMS1, ..., VMS20) und aus einer oder mehreren Vermittlungsstellen (VST), die mit einem oder mehreren der Sprach- und/oder Faxspeichersysteme über eine Vielzahl von zugeordneten Zugangsleitungen (PCM30) verbunden sind, wobei jedes der Sprach- und/oder Faxspeichersysteme (VMS1, ..., VMS20) über je eine Netzwerkschnittstelle (FDDI = Fiber Distributed Data Interface) mit einem alle Sprach- und/oder Faxspeichersysteme verbindenden Nachrichtenweg (NW) verbunden sind.

2. Netzwerk nach Anspruch 1, bei dem die Netzwerkschnittstellen (FDDI) und der Nachrichtenweg (NW) mittels eines Lichtwellenleiter-Ringsystems (LWL-S) aufgebaut sind.

3. Netzwerk nach Anspruch 1, bei dem die Netzwerkschnittstellen (FDDI) und der Nachrichtenweg (NW) mittels eines Ethernet nach IEEE 802.3 oder mittels eines Token Ring nach IEEE 802.5 realisiert werden.

4. Netzwerk nach Anspruch 1, bei dem die Netzwerkschnittstelle (FDDI) mit einem Bussystem des Sprach- und/oder Faxspeichersystems verbunden ist, wobei eine Vielzahl von Zwischenspeichern (PTS1, ..., FAX) und eine Signalisierungseinheit (INU), die mit den Zugangsleitungen (PCM30) verbunden ist, sowie eine Vermittlungseinheit (GTP) und eine Steuereinheit (CPU30) derart über das Bussystem untereinander verbunden sind, daß einerseits sowohl über die Zugangsleitungen (PCM30) übertragene Steuerdaten als auch Sprach- und/oder Faxnachrichten in Massenspeichern (VD, DD) des Sprach- und/oder Faxspeichersystems ablegbar sind und andererseits über die Netzwerkschnittstelle (FDDI) sowohl die Steuerdaten als auch die Sprach- und/oder Faxnachrichten zu jedem anderen Sprach- und/oder Faxspeichersystem übertragbar sind.

5. Netzwerk nach einem der vorherigen Patentansprüche, wobei wenigstens eines der Vielzahl von Sprach- und/oder Faxspeichersysteme (VMS1, ..., VMS20) mit einem Datensichtgerät für Verwaltung, Bedienung und Wartung (Operator) verbunden ist und wobei für Verwaltung, Bedienung und Wartung der Vielzahl von Sprach- und/oder Faxspeichersystem von dem Datensichtgerät aus über die Netzwerkschnittstelle (FDDI) und den Nachrichtenweg (NW) eine Verbindung mit jedem der Vielzahl von Sprach- und/oder Faxspeichersysteme herstellbar ist.

6. Verfahren zum Ablegen von Sprach- und/oder Faxnachrichten in einer Heimatnachrichtenbox eines Teilnehmers in einem aus einer Vielzahl von Sprach- und/oder Faxspeichersystemen bestehenden Netzwerk gemäß einem der Patentansprüche 1 bis 4, bestehend aus folgenden Schritten:
- Übertragen einer durch einen Teilnehmer eingegebenen Zugangsnummer zu der Vermittlungsstelle und Belegen einer beliebigen freien Zugangsleitung zu einem (VSM1) der Vielzahl von Sprach- und/oder Faxspeichersysteme,
- Ausgeben einer Ansagenachricht durch das eine Sprach- und/oder Faxspeichersystem mit der der Teilnehmer zur Eingabe einer gewünschten Heimatnachrichten-Boxnummer aufgefordert wird, und Bereitstellen einer Gästenachrichtenbox,
- nach dem Empfang der gewünschten Heimatnachrichten-Boxnummer, Aussenden einer Rundrufnachricht durch das eine Sprach- und/oder Faxspeichersystem (VMS1) über die Netzwerkschnittstelle (FDDI) und den Nachrichtenweg (NW) an alle anderen Sprach- und/oder Faxspeichersysteme (VMS2, ..., VMS20) zum Ermitteln eines weiteren Systemes (VMS2), in dem die der Heimatnachrichten-Boxnummer zugehörige Heimatnachrichtenbox eingerichtet ist,
- Übertragen einer Antwortnachricht durch das weitere System (VMS2) über die Netzwerkschnittstelle (FDDI) und den Nachrichtenweg (NW) zu dem einen System (VMS1), das die Rundrufnachricht ausgesendet hat, wobei die Antwortnachricht alle die Heimatnachrichtenbox kennzeichnenden Steuerungsdaten enthält,
- Ausgeben durch das eine System (VMS1) mit der der Teilnehmer einer Ansagenachricht zur Sprach- und/oder Faxnachrichteneingabe aufgefordert wird,
- Ablegen der eingegebenen Sprach- und/oder Faxnachricht in der Gästenachrichtenbox und
- nach Beendigung der Eingabe durch den Teilnehmer, Übertragen der Sprach- und/oder Faxnachricht in den Massenspeicher des einen Systems (VMS1), sowie Übertragen der dieser Nachricht zugeordneten Steuerdaten über die Netzwerkschnittstelle (FDDI) und den Nachrichtenweg (NW) zur Heimatnachrichtenbox im weiteren System (VMS2).

7. Verfahren nach Anspruch 6, bestehend aus folgendem Schritt:
- nach Beendigung der Eingabe durch den Teilnehmer, Übertragen der eingegebenen Sprach- und/oder Faxnachricht sowie der diese Nachricht zugeordneten Steuerdaten über die Netzwerkschnittstelle (FDDI) und den Nachrichtenweg (NW) zur Heimatnachrichtenbox im weiteren System (VMS2).

8. Verfahren zum Abfragen oder Ablegen von Sprach- und/oder Faxnachrichten aus bzw. in eine Heimatnachrichtenbox eines berechtigten Teilnehmers in einem aus einer Vielzahl von Sprach- und/oder Faxspeichersystemen bestehenden Netzwerk gemäß einem der Patentansprüche 1 bis 4, bestehend aus folgenden Schritten,
- Übertragen einer durch den Teilnehmer eingegebenen Zugangsnummer zu der Vermittlungsstelle und Belegen einer beliebigen freien Zugangsleitung zu einem (VSM1) der Vielzahl von Sprach- und/oder Faxspeichersysteme,
- Ausgeben einer Ansagenachricht durch das eine Sprach- und/oder Faxspeichersystem (VMS1), mit der der Teilnehmer zur Eingabe einer gewünschten Heimatnachrichten-Boxnummer aufgefordert wird, und bereitstellen einer Gästenachrichtenbox,
- nach Empfang einer Heimatnachrichten-Boxnummer, die mit einer einen Heimatnachrichten-Boxinhaber ausweisenden Kennung versehen ist, Aussenden einer Rundrufnachricht durch das eine Sprach- und/oder Faxspeichersystem (VMS1) über die Netzwerkschnittstelle (FDDI) und den Nachrichtenweg (NW) zu allen anderen Sprach- und/oder Faxspeichersystemen (VMS2, ..., VMS20) zum Ermitteln eines weiteren Systems (VMS2), in dem die der Heimatnachrichten-Boxnummer zugehörigen Heimatnachrichtenbox eingerichtet ist,
- Übertragen einer Antwortnachricht durch das weitere System (VMS2) über die Netzwerkschnittstelle (FDDI) und den Nachrichtenweg (NW) zu dem einen System (VMS1), das die Rundrufnachricht ausgesendet hat, wobei die Antwortnachricht alle die Heimatnachrichtenbox kennzeichnenden Steuerungsdaten, mit zugehörigen persönlichen Zugangscode und Inhaltsverzeichnis enthält,
- Ausgeben einer Ansagenachricht durch das eine System mit der der Teilnehmer zur Eingabe seines persönlichen Zugangscode aufgefordert wird, und anschließendes Überprüfen des eingegebenen Zugangscodes auf Übereinstimmung mit dem übertragenen Zugangscode,
- wenn der Teilnehmer ein berechtigter Teilnehmer ist, Ausgeben einer Ansagenachricht, mit der der Teilnehmer zu einem beliebigen Zugriff zur Abfrage oder Ablage einer Sprach- und/oder Faxnachricht aufgefordert wird und Bereitstellen einer permanenten Verbindung zwischen dem einen System (VMS1) über die Netzwerkschnittstelle (FDDI) und den Nachrichtenweg (NW) mit dem die Heimatnachrichtenbox enthaltenden weiteren System (VMS2) für die gesamte Dauer des Zugriffs, und
- nach Beendigung des Zugriffs durch den berechtigten Teilnehmer, Übertragen aller geänderten Steuerungsdaten über die Netzwerkschnittstelle (FDDI) und den Nachrichtenweg (NW) zur Heimatnachrichtenbox des weiteren Systems (VMS2) und Abbauen der permanenten Verbindung.

9. Verfahren nach Anspruch 8, besteht aus folgendem Schritt:
- im Falle einer Nachrichtenablage durch den berechtigten Teilnehmer in der zugeordneten Gästenachrichtenbox des einen Systems, Ablegen der Sprach- und/oder Faxnachricht in den Massenspeicher des einen Systems und Übertragen der dieser Nachricht zugeordneten Steuerungsdaten sowie eines geänderten Inhaltsverzeichnisses über die Netzwerkschnittstelle (FDDI) und den Nachrichtenweg (NW) zur Heimatnachrichtenbox des weiteren Systems (VMS2).

10. Verfahren nach Anspruch 8, bestehend aus folgenden Schritten:
- im Falle einer Nachrichtenablage durch den berechtigten Teilnehmer in der zugeordneten Gästenachrichtenbox des einen Systems (VMS1), Übertragen der eingegebenen Sprach- und/oder Faxnachricht über die Netzwerkschnittstelle (FDDI) und den Nachrichtenweg (NW) zur Heimatnachrichtenbox im weiteren System (VMS2).
